# EUROPÄISCHE PATENTSCHRIFT

(11) **EP 3 790 712 B1**
(45) Veröffentlichungstag und Bekanntmachung des Hinweises auf die Patenterteilung: **19.06.2024**
(21) Anmeldenummer: 19715424.8
(22) Anmeldetag: 27.03.2019
(51) Int. Cl.: B25J 15/02, B25J 15/06, B66C 1/02, B65G 47/91

(54) **GREIFVORRICHTUNG ZUM HALTEN WENIGSTENS EINES BAUTEILS SOWIE VERFAHREN ZUM HALTEN**
GRIPPING DEVICE FOR HOLDING AT LEAST ONE COMPONENT AND HOLDING METHOD
DISPOSITIF DE PRÉHENSION POUR TENIR AU MOINS UN COMPOSANT ET PROCÉDÉ DE MAINTIEN ASSOCIÉ

(30) Priorität: 08.05.2018 DE 102018207096
(43) Veröffentlichungstag der Anmeldung: 17.03.2021
(73) Patentinhaber: Robert Bosch GmbH, 70442 Stuttgart (DE)
(72) Erfinder: SIES, Steffen, 72108 Rottenburg (DE); PASTOR ALONSO, Cesar, 70197 Stuttgart (DE); ELTER, Alexander, 68259 Mannheim (DE)
(86) Internationale Anmeldenummer: PCT/EP2019/057666
(87) Internationale Veröffentlichungsnummer: WO 2019/214874

(56) Entgegenhaltungen:
- EP-A1- 2 481 532
- AT-B- 398 416
- JP-A- H05 212 642
- JP-U- S6 123 517
- US-A1- 2016 136 821

## Beschreibung

### Stand der Technik

Die Erfindung betrifft eine Greifvorrichtung nach dem Oberbegriff des Anspruchs 1. Ferner betrifft die Erfindung ein Verfahren zum Betreiben einer erfindungsgemäßen Greifvorrichtung.

Eine Greifvorrichtung zum Halten wenigstens eines Bauteils ist aus der DE 10 2014 223 118 A1 bekannt. Die bekannte Greifvorrichtung zeichnet sich durch Haltemittel aus, denen ein Kontaktelement zum Halten des wenigstens einen Bauteils zugeordnet ist. Das Kontaktelement umfasst pneumatisch wirkende Mittel, die bei der bekannten Greifvorrichtung durch mit Unterdruck beaufschlagbare Saugnäpfe ausgebildet sind. Zum Greifen des wenigstens einen Bauteils erfolgt zunächst eine Relativpositionierung der über Gelenke bewegbar gelagerten Haltemittel, bevor durch die Saugnäpfe eine Haltekraft in das wenigstens eine Bauteil eingebracht wird, um das wenigstens eine Bauteil mittels der Haltemittel zu fixieren und somit sicher zu halten. Nachteilig bei der bekannten Greifvorrichtung ist, dass die Erzeugung des Unterdrucks eine (zentrale) Unterdruckerzeugungseinheit erfordert, wobei der Unterdruck dann über aufwendig verlegbare Druckleitungen zu sämtlichen Saugnäpfen geführt werden muss. Gleichzeitig ist auch die Variation des Unterdrucks insbesondere nur über (kostspielige) Druckminderungsventile möglich, die zudem störanfällig für durch Verschmutzung verursachte Verstopfung sind.

Das Dokument EP 2 481 532 A1 offenbart eine Greifvorrichtung zum Halten wenigstens eines Bauteils, wobei ein Unterdruck durch eine durch ein magnetisches Feld hervorrufbare elastische Deformation eines Kontaktelements erzeugbar ist.

### Offenbarung der Erfindung

Die erfindungsgemäße Greifvorrichtung zum Halten wenigstens eines Bauteils mit den Merkmalen des Anspruchs 1 hat den Vorteil, dass die Fixierung des wenigstens einen Bauteils mit den pneumatisch wirkenden Mitteln des Kontaktelements optimiert wird. Der Erfindung liegt die Idee zugrunde, einen Unterdruck durch eine elastische Deformation des Kontaktelements über ein elektrisches oder alternativ magnetisches Feld hervorzurufen und insbesondere auch derart zu beeinflussen, dass die auf das wenigstens eine Bauteil einwirkende Haltekraft beeinflussbar ist, ohne dass dabei der Anpressdruck mittels der Haltemittel auf das wenigstens eine Bauteil verändert werden muss. Ferner lässt sich eine erfindungsgemäße Greifvorrichtung ggf. kostengünstiger aufbauen und auch zuverlässiger betreiben, da auf sämtlichen Druckleitungen sowie auf die zentrale Unterdruckversorgungseinheit verzichtet werden kann.

Die pneumatisch wirkenden Mittel weisen ein Elastomermaterial auf, in dem ferromagnetische Partikel oder Permanentmagnetmittel enthalten sind. Hierbei können die ferromagnetischen Partikel im Sinne der Erfindung z. B. plättchenartig, kugelförmig und/oder kubisch ausgebildet sein. Das Elastomermaterial zeichnet sich durch Eigenschaften wie etwa flexibel, weich und/oder verformbar aus und ist dazu ausgebildet, ein Vakuum gegenüber Oberflächen an dem zu haltenden Bauteil mit einer Rauigkeit zwischen 0,01µm bis 50µm abzudichten, wodurch sich vielseitig einsetzbare pneumatisch wirkende Mittel realisieren lassen.

Vorteilhafte Weiterbildungen der erfindungsgemäßen Greifvorrichtung zum Halten wenigstens eines Bauteils sind in den Unteransprüchen aufgeführt.

Weiterbildend ist es bevorzugt, wenn die im Elastomermaterial enthaltenen ferromagnetischen Partikel aus Eisen, Nickel, und/oder Cobalt bestehen, da dies eine einfache Realisierung der ferromagnetischen Partikel ermöglicht. Ferner weisen diese Materialien besonders gute elektromagnetische Eigenschaften auf, um in einem elektrischen oder magnetischen Feld die elastische Deformation des Elastomermaterials als Kontaktelement hervorzurufen.

Eine Fortbildung der Erfindung sieht vor, dass die pneumatisch wirkenden Mittel auf der dem Bauteil zugewandten Stirnseite sowie auf der dem Bauteil abgewandten Stirnseite eine elektrisch leitende Schicht aufweisen, wobei mittels einer Spannungsquelle zwischen diesen beiden elektrisch leitenden Schichten ein elektrisches Feld zur Erzeugung der erfindungsgemäßen elastischen Deformation des Elastomermaterials erzeugbar ist. Eine solche elektrisch leitende Schicht lässt sich bevorzugt durch ein dotiertes Halbleitermaterial oder eine metallische Legierung kostengünstig und damit großserientechnisch erzeugen. Jedoch werden darunter auch sämtliche andere Materialien mit frei bewegbaren Ladungsträgern verstanden. Alternativ können auch den pneumatisch wirkenden Mitteln auf der dem wenigstens einen Bauteil abgewandten Stirnseite Magnetfelderzeugungsmittel, insbesondere Spulenmittel zugeordnet sein, wobei die Spulenmittel wenigstens eine Wicklung aufweisen, um bei Bestromung mittels eines Erregerstroms ein magnetisches Feld zu erzeugen und somit die erfindungsgemäße elastische Deformation des Elastomermaterials hervorzurufen.

Weiterbildend ist bevorzugt vorgesehen, dass die Kontur bzw. äußere Form des Elastomermaterials zylindrisch oder quaderförmig ausgebildet ist, wobei das Elastomermaterial in Bezug auf diese Kontur in einem zentralen Bereich eine erhöhte Konzentration der ferromagnetischen Partikel aufweist und in einem Randbereich vorzugsweise keine ferromagnetischen Partikel oder alternativ eine deutlich geringere Konzentration an ferromagnetischen Partikeln vorgesehen sind/ist. Die ferromagnetischen Partikel sind im zentralen Bereich bevorzugt in einer oder alternativ in mehreren vorzugsweise parallel zur Kontaktfläche verlaufenden Ebene/n angeordnet und stehen nicht mit der elektrisch leitenden Schicht oder den Magnetfelderzeugungsmitteln, insbesondere den Spulenmitteln in elektrisch leitender Wirkverbindung. Dies ermöglicht es, mittels des sich zwischen den beiden vorzugsweise an den beiden Stirnseiten des Elastomermaterials vorgesehenen elektrisch leitenden Schichten ausbildenden elektrischen Feldes ein Unterdruck zwischen dem wenigstens einen Bauteil und dem die Kontaktfläche ausbildenden Elastomermaterial auszubilden, um die auf das wenigstens eine Bauteil einwirkende Haltekraft zu erzeugen, wobei vorteilhaft der mittels der vorzugsweise wenigstens zwei Greiffinger aufweisende Haltemittel auf das wenigstens eine Bauteil ausgeübte Anpressdruck nicht erhöht werden muss. Alternativ kann der Unterdruck auch durch Bestromung der Magnetfelderzeugungsmittel, insbesondere der Spulenmittel, erzeugt werden, da sich als Reaktion auf die Bestromung der Magnetfelderzeugungsmittel, insbesondere der Spulenmittel, ein magnetisches Feld ausbildet, das die ferromagnetischen Partikel kraftbeaufschlägt. Dies bietet den Vorteil, dass eine Beschädigung des wenigstens einen Bauteils durch einen zu großen Anpressdruck durch die beiden Greiffinger verhindert werden kann.

Besonders bevorzugt ist, wenn das Elastomermaterial auf der, dem wenigstens einen Bauteil abgewandten Stirnseite eine vorzugsweise kuhlenartig ausgebildete Vertiefung und/oder Aussparung aufweist, wobei die Vertiefung bzw. Aussparung vorzugsweise in einem zentralen Bereich des Kontaktelements angeordnet ist. Dies ermöglicht es auf besonders einfache Weise einen Unterdruck zwischen dem Elastomermaterial und dem wenigstens einen Bauteil mittels des elektrischen oder alternativ magnetischen Feldes zu erzeugen, da auf die im Elastomermaterial enthaltenen ferromagnetischen Partikel eine Kraft entlang der elektrischen Feldlinien des elektrischen Feldes oder alternativ der magnetischen Feldlinien des magnetischen Feldes einwirken kann, die die elastische Deformation des Elastomermaterials hervorrufen, durch die der Unterdruck zwischen dem Elastomermaterial und der Oberfläche des Bauteils erzeugt werden kann. Alternativ kann das Elastomermaterial auch komprimierbar ausgebildet sein, wobei dann keine Vertiefung bzw. Aussparung nötig ist.

Weiterbildend ist es vorgesehen, dass das Elastomermaterial an einer senkrecht zur Kontaktfläche verlaufenden Umfangsfläche zumindest bereichsweise von einem starren und/oder steifen Element umfasst ist, wobei das starre bzw. steife Element eine Anlagefläche für das wenigstens eine Bauteil anbietet, die vorzugsweise Bestandteil der Kontaktfläche ist. Dies ermöglicht die vorteilhafte feste und/oder definierbare Ausrichtung des wenigstens einen Bauteils beim Halten mit den vorzugsweise durch das Elastomermaterial ausgebildeten pneumatisch wirkenden Mitteln trotz der elastischen Deformation des Elastomermaterials.

In einer Fortbildung der Erfindung weist die Greifvorrichtung eine Vielzahl von matrixartig in einer Ebene angeordneten Kontaktelementen auf, die vorzugsweise gemeinsam die Kontaktfläche zum Halten des wenigstens einen Bauteils ausbilden.

Weiterbildend ist es bevorzugt vorgesehen, dass die Dimensionierung des Kontaktelements in einer in der Ebene der Kontaktfläche liegenden Achse eine Erstreckung von 1cm bis 5cm, insbesondere von 1cm bis 3cm aufweist, was sich für Bauteile im Sinne der Erfindung als vorteilhafte Maße herausgestellt hat. Somit kann das wenigstens eine Bauteil gleichzeitig über eine durch mehrere Kontaktelemente gebildete Kontaktfläche der Haltemittel der Greifvorrichtung kontaktiert werden, um über die Erzeugung des Unterdrucks mittels der elastischen Deformation des Kontaktelements das wenigstens eine Bauteil zu fixieren. Darüber hinaus ist es bevorzugt vorgesehen, wenn das Kontaktelement, insbesondere das Elastomermaterial, zur Ausbildung eines Unterdrucks auf Oberflächen des zu haltenden Bauteils mit einer Rauheit zwischen 0,01 µm bis 50µm, insbesondere zwischen 0,01 µm bis 30µm ausgebildet ist.

Eine weitere vorteilhafte Maßnahme der Erfindung ergibt sich bei einer Ausführungsform, in der das elektrische Feld oder alternativ das magnetische Feld der Kontaktelemente einzeln oder in Gruppen ansteuerbar ist. Dies ermöglicht es gezielt die Haltekraft jedes einzelnen Kontaktelements zu beeinflussen und somit eine optimale Fixierung des wenigstens einen Bauteils an der Kontaktfläche zu realisieren. Gemeint ist hierbei, dass bei schweren Bauteilen durch ein stärkeres elektrisches Feld bzw alternativ ein stärkeres magnetisches Feld eine größere Haltekraft durch eine stärkere elastische Deformation erzeugbar ist als bei einem leichteren Bauteil.

Weiterbildend ist zudem vorgesehen, dass - wie bereits erwähnt - die Haltemittel wenigstens zwei, jeweils wenigstens ein Kontaktelement umfassende Greiffinger aufweisen, wobei die wenigstens zwei Greiffinger zu dem wenigstens einen Bauteil relativbewegbar sind und wobei die wenigstens zwei Greiffinger vorzugsweise Bestandteil eines Handhabungsroboters sind, um somit insbesondere unterschiedlich ausgebildete Bauteile mittels der Haltemittel sicher zu halten und an einer Zielposition zu positionieren.

In einer weiteren Ausführungsform der Erfindung sind wenigstens einem Kontaktelement Sensormittel zugeordnet, wobei die Sensormittel dazu ausgebildet sind, die Relativposition des wenigstens einen Bauteils zu dem Kontaktelement zu erfassen. Dies ermöglicht es, dass der erzeugte Unterdruck in Abhängigkeit einer Sensorausgangsgröße verändert werden kann, wodurch auch bei dynamischen Greifvorgängen ein sicheres Halten des wenigstens einen Bauteils durch eine aktive Anpassung der Haltekraft gewährleistet werden kann. Darüber hinaus bietet dies den Vorteil, dass auch unterschiedlich ausgebildete Bauteile sicher mit den Haltemitteln gehalten werden können.

Schließlich umfasst die Erfindung auch ein Verfahren zum Greifen wenigstens eines Bauteils mit einer erfindungsgemäßen Greifvorrichtung, wobei das Verfahren die folgenden Schritte umfasst: In einem ersten Schritt erfolgt eine Relativpositionierung des wenigstens einen eine Kontaktfläche aufweisenden Kontaktelements der Haltemittel zu dem wenigstens einen Bauteil, um das wenigstens eine Bauteil mit der Kontaktfläche in Wirkverbindung zu bringen. In einem weiteren, zweiten Verfahrensschritt erfolgt das Erzeugen eines elektrischen oder alternativ magnetischen Feldes zum Ausbilden eines mittels der pneumatisch wirkenden Mittel des Kontaktelements erzeugbaren Unterdrucks zwischen dem wenigstens einen Bauteil und der Kontaktfläche, die durch eine partielle Deformation des Kontaktelements hervorrufbar ist.

Ein weiterer vorteilhafter Verfahrensschritt wird weiterbildend dadurch gebildet, dass die Sensormittel die Relativposition des wenigstens einen Bauteils zu dem Kontaktelement erfassen, wobei das elektrische Feld oder alternativ das magnetische Feld dann in Abhängigkeit einer Sensorausgangsgröße beeinflusst wird, um die auf das wenigstens eine Bauteil einwirkende Haltekraft aktiv einzustellen und somit ein sicheres Halten des wenigstens einen Bauteils zu gewährleisten.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine schematische Darstellung einer erfindungsgemäßen Greifvorrichtung, wobei die Haltemittel zwei Greiffinger aufweisen,
- Fig. 2: in Draufsicht eine schematische Darstellung eines pneumatisch wirkende Mittel aufweisenden Kontaktelements,
- Fig. 3a und Fig. 3b: jeweils einen Längsschnitt des aus Fig. 2 bekannten Kontaktelements im Ruhezustand sowie beim Halten wenigstens eines Bauteils, wobei die elastische Deformation mittels eines elektrischen Feldes erzeugt wird,
- Fig. 4: in Draufsicht eine schematische Darstellung einer aus einer Mehrzahl von matrixartig angeordneten Kontaktelementen ausgebildeten Kontaktfläche bei einer bevorzugten Ausführungsform der erfindungsgemäßen Greifvorrichtung und
- Fig. 5: in Draufsicht eine schematische Darstellung eines Kontaktelements, bei welche die elastische Deformation des Elastomermaterial mittels eines magnetischen Feldes erzeugbar ist.

Gleiche Elemente bzw. Elemente mit gleicher Funktion sind in den Figuren mit den gleichen Bezugsziffern versehen.

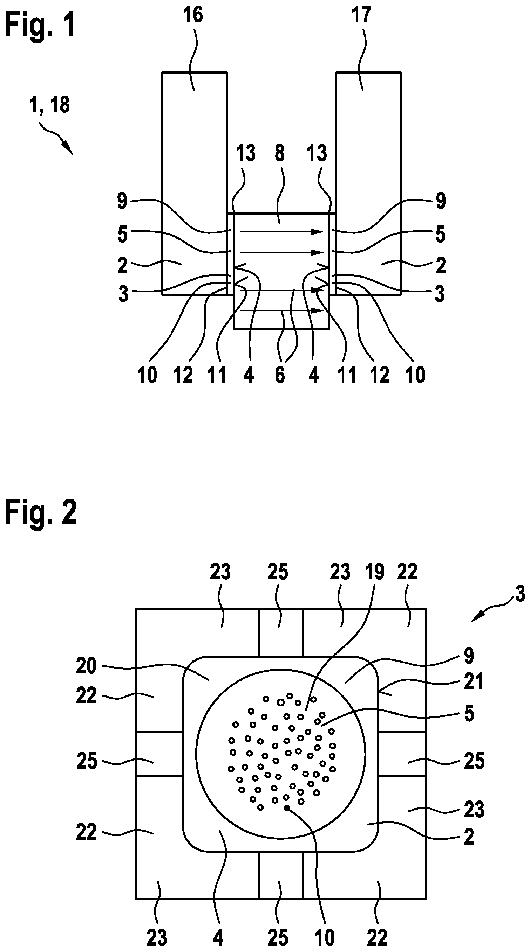

Die Fig. 1 zeigt Haltemittel 2 einer erfindungsgemäßen Greifvorrichtung 1 zum Halten wenigstens eines Bauteils 8, die Bestandteil eines lediglich teilweise dargestellten Handhabungsroboters 18 sind. Die Haltemittel 2 bestehen aus einem ersten Greiffinger 16 und einem gegenüberliegenden zweiten Greiffinger 17, wobei an den beiden Greiffingern 16, 17 Kontaktelemente 3 zum Halten des wenigstens einen Bauteils 8 angeordnet sind, welche auf einer dem wenigstens einen Bauteil 8 zugewandten Stirnseite eine Kontaktfläche 4 ausbilden. Die Kontaktelemente 3 umfassen pneumatisch wirkende Mittel 5 zum Erzeugen eines Unterdrucks zwischen dem wenigstens einen Bauteil 8 und der Kontaktfläche 4.

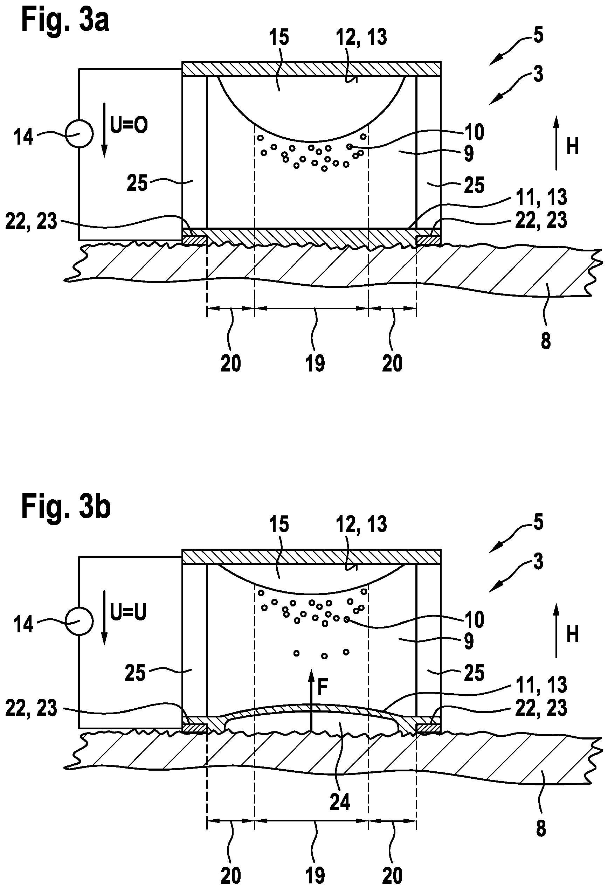

Erfindungsgemäß kann der Unterdruck durch eine bereichsweise elastische Deformation des Kontaktelements 3 erzeugt werden, die durch ein mittels elektrischer Feldlinien 6 dargestelltes elektrisches Feld hervorrufbar ist. Die pneumatisch wirkenden Mittel 5 umfassen ein Elastomermaterial 9, in dem ferromagnetische Partikel 10, beispielsweise aus Eisen, angeordnet sind. Die pneumatisch wirkenden Mittel 5 sämtlicher Kontaktelemente 3 der beiden Greiffinger 16, 17 sind in einer dem wenigstens einen Bauteil 8 zugewandten Stirnseite 11 sowie in einer vom wenigstens einen Bauteil 8 abgewandten Stirnseite 12 des Elastomermaterials 9 mit einer elektrisch leitenden Schicht 13 überzogen, wobei zwischen den beiden elektrisch leitenden Schichten 13 eine elektrische Spannung mittels einer in Fig. 3a und Fig. 3b eingezeichneten Spannungsquelle 14 angelegt werden kann, um das elektrische Feld auszubilden. Durch das elektrische Feld kann erfindungsgemäß die elastische Deformation des Kontaktelements 3 hervorgerufen werden, um den Unterdruck zwischen dem wenigstens einen Bauteil 8 und der Kontaktfläche 4 zu erzeugen, wodurch - ohne dass die durch die beiden Greiffinger 16, 17 auf das wenigstens eine Bauteil 8 aufgebrachte Anpresskraft verändert werden muss - eine Haltekraft in das wenigstens eine Bauteil 8 eingebracht werden kann.

Die Fig. 2 zeigt eine schematische Darstellung eines Kontaktelements 3 der pneumatisch wirkenden Mittel 5, wobei die pneumatisch wirkenden Mittel 5 das Elastomermaterial 9 aufweisen. Durch die dem wenigstens einen Bauteil 8 zugewandte Stirnseite 11 des Elastomermaterials 9 wird anteilig die Kontaktfläche 4 für das wenigstens eine Bauteil 8 ausgebildet. Wie aus der Fig. 2 ersichtlich ist, ist in einem zentralen Bereich 19 des Elastomermaterials 9 eine hohe Konzentration von ferromagnetischen Partikeln 10 vorgesehen. Der zentrale Bereich 19 ist von einem Randbereich 20 des Elastomermaterials 9 umgeben, der keine ferromagnetischen Partikel 10 bzw. eine deutlich geringere Konzentration an ferromagnetischen Partikeln 10 aufweist. An einer senkrecht zur Kontaktfläche 4 angeordneten Umfangsfläche 21 des Elastomermaterials 9 befindet sich zumindest bereichsweise ein starres Element 22, wobei das starre Element 22 eine Anlagefläche 23 für das Bauteil 8 ausbildet, die gemeinsam mit der dem wenigstens einen Bauteil 8 zugewandten Stirnseite 11 des Elastomermaterials 9 die Kontaktfläche 4 des Kontaktelements 3 ausbildet. Beim Halten des wenigstens einen Bauteils 8 mittels der Haltemittel 2 liegt die Oberfläche des wenigstens einen Bauteils 8 an der Anlagefläche 23 an, wodurch trotz der nicht graphisch dargestellten elastischen Deformation des Elastomermaterial 9 eine vorgegebene und feste Ausrichtung des wenigstens einen Bauteils 8 mittels der Haltemittel 2 gewährleistet ist. Darüber hinaus sind vier Sensorelemente der Sensormittel 25 vorgesehen, um die Relativposition des wenigstens einen Bauteils 8 zu den Haltemitteln 2 zu erfassen und zu überwachen. Dies ermöglicht es, durch eine Beeinflussung des elektrischen Feldes die auf das wenigstens eine Bauteil 8 einwirkende Haltekraft zu optimieren, um eine sicheres Halten des wenigstens einen Bauteils 8 zu gewährleisten.

Die Fig. 3a und die Fig. 3b zeigen das aus der Fig. 2 bekannte Kontaktelement 3 in einem Schnitt, wobei in der Fig. 3a der nicht aktive Zustand des Kontaktelements 3 und in der Fig. 3b der Zustand des Haltens durch das Kontaktelement 3 dargestellt ist. Im Ruhebetrieb liegt an den beiden elektrisch leitenden Schichten 13 keine Spannung an, weshalb sich auch kein elektrisches Feld ausbildet. Beim aktiven Zustand wird mittels der Spannungsquelle 14 ein elektrisches Feld zwischen den beiden elektrisch leitenden Schichten 13 erzeugt, um die elastische Deformation des Kontaktelements 3 zur Erzeugung des Unterdrucks hervorzurufen. In der Fig 3a sowie in der Fig. 3b ist das Elastomermaterial 9 der pneumatisch wirkenden Mittel 5 dargestellt, in dem in einem zentralen Bereich 19 neben den ferromagnetischen Partikeln 10 auch eine kuhlenartige Vertiefung 15 angeordnet ist, wobei die kuhlenartige Vertiefung 15 auf der vom wenigstens einen Bauteil 8 abgewandten Stirnseite 12 angeordnet ist. Erfindungsgemäß kann durch das elektrische Feld eine elastische Deformation des Elastomermaterials 9 im zentralen Bereich 19 derart hervorgerufen werden, dass die kuhlenartige Vertiefung 15 entlang der Höhenerstreckung H verkleinert wird und sich auf der dem wenigstens einen Bauteil 8 zugewandten Stirnseite 11 des Elastomermaterials 9 eine Aushöhlung 24 ausbildet, zum Erzeugen des Unterdrucks zwischen dem wenigstens einen Bauteil 8 und der als Kontaktfläche 4 ausgebildeten dem wenigstens einen Bauteil 8 zugewandte Stirnfläche 11 des Elastomermaterials 9. Durch den sich ausbildenden Unterdruck kann eine Haltekraft F in das wenigstens eine Bauteil 8 eingebracht werden, die ein sicheres Halten des wenigstens einen Bauteils 8 ermöglicht. In dem linken und dem rechten Randbereich von Fig. 3a und Fig. 3b werden durch ein starres Element 22 Anlageflächen 23 für das wenigstens eine Bauteil 8 bereitgestellt, die trotz der elastischen Deformation des Elastomermaterials 9 beim Halten des wenigstens einen Bauteils 8 eine definierte Ausrichtung des Bauteils 8 zum Kontaktelement 3 gewährleisten. Darüber hinaus sind auch die hinter den Anlageflächen 23 vorgesehenen Sensormittel 25 sichtbar, die das Erfassen der Relativposition des wenigstens einen Bauteils 8 von den Haltemitteln 2 ermöglichen und somit in Abhängigkeit einer Sensorausgangsgröße eine Beeinflussung des elektrischen Feldes zur Variation des Unterdrucks ermöglichen.

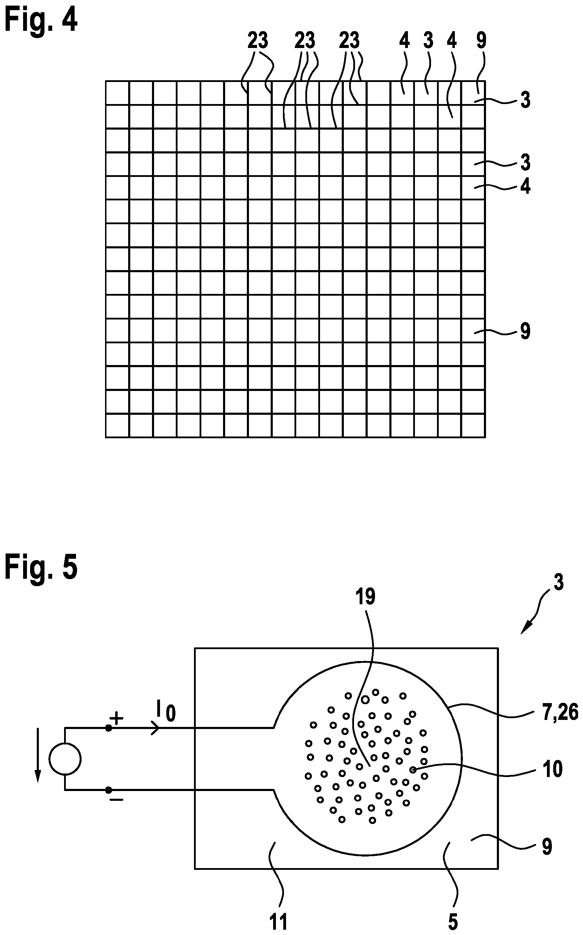

Die Fig. 4 zeigt in Draufsicht die anteilig durch das Elastomermaterial 9 sowie die Anlagefläche 23 ausgebildete Kontaktfläche 4, die durch eine Vielzahl von in einer Ebene matrixartig angeordneten Kontaktelementen 3 ausgebildet wird. Sämtliche in der Fig. 4 dargestellten Kontaktelemente 3 weisen eine Länge von 1cm x 1cm auf, wobei zwischen zwei benachbarten Kontaktelementen 3 wenigstens eine Anlagefläche 23 zur definierten Ausrichtung des wenigstens einen Bauteils 8 in einem das Bauteil 8 haltenden Zustand vorgesehen sind. Ferner kann das elektrische Feld jedes Kontaktelements 3 angesteuert und bis zu einem bestimmten Grenzwert variiert werden, um die auf das wenigstens eine Bauteil 8 einwirkende Haltekraft F optimal einzustellen und ein sicheres Halten des wenigstens einen Bauteils 8 sicher zu stellen.

In der Fig. 5 ist als alternative Ausführungsform der Greifvorrichtung 1 in Draufsicht eine schematische Darstellung des Kontaktelements 3 dargestellt, wobei die elastische Deformation des Elastomermaterials 9 mittels eines magnetischen Feldes erzeugbar ist. Hierfür weisen die pneumatisch wirkenden Mittel 5 Magnetfelderzeugungsmittel 26 auf, die als Spulenmittel 7 ausgebildet sind und die der vom wenigstens einen Bauteil 8 abgewandten Stirnseite 11 zugeordnet sind. Die Spulenmittel 7 bestehen aus einer Wicklung und bilden bei Bestromung ein magnetisches Feld aus, wobei das magnetische Feld eine Kraft auf die im zentralen Bereich 19 angeordneten ferromagnetischen Partikel 10 ausübt, durch die das Elastomermaterial 9 verformt wird und sich somit zwischen dem wenigstens einen Bauteil 8 und der Kontaktfläche 4 der Unterdruck ausbildet.

## Patentansprüche

1. Greifvorrichtung (1) zum Halten wenigstens eines Bauteils (8), mit Haltemitteln (2) mit wenigstens einem eine Kontaktfläche (4) aufweisenden Kontaktelement (3) zum Halten des wenigstens einen Bauteils (8), wobei das Kontaktelement (3) pneumatisch wirkende Mittel (5) zum Erzeugen eines Unterdrucks zwischen dem wenigstens einen Bauteil (8) und der Kontaktfläche (4) aufweist, wobei der Unterdruck durch eine durch ein elektrisches oder magnetisches Feld hervorrufbare elastische Deformation des Kontaktelements (3) erzeugbar ist,
**dadurch gekennzeichnet,**
**dass** die pneumatisch wirkenden Mittel (5) ein Elastomermaterial (9) aufweisen, in dem ferromagnetische Partikel (10) angeordnet sind.

2. Greifvorrichtung nach Anspruch 1,
**dadurch gekennzeichnet,**
**dass** die ferromagnetischen Partikel (10) aus Eisen und/oder Nickel und/oder Cobalt bestehen.

3. Greifvorrichtung nach einem der Ansprüche 1 bis 2,
**dadurch gekennzeichnet,**
**dass** die pneumatisch wirkenden Mittel (5) auf einer dem wenigstens einen Bauteil (8) zugewandten Stirnseite (11) und einer dem wenigstens einen Bauteil (8) abgewandten Stirnseite (12) mit einer elektrisch leitenden Schicht (13) versehen sind, wobei zum Ausbilden des elektrischen Feldes die beiden elektrisch leitenden Schichten (13) über eine Spannungsquelle (14) verbindbar sind oder den pneumatisch wirkenden Mitteln (5) auf der dem wenigstens einen Bauteil (8) abgewandten Stirnseite (12) Magnetfelderzeugungsmittel, insbesondere wenigstens eine Wicklung aufweisende Spulenmittel (7) zum Erzeugen eines magnetischen Feldes zugeordnet sind.

4. Greifvorrichtung nach einem der Ansprüche 1 bis 3,
**dadurch gekennzeichnet,**
**dass** das Elastomermaterial (9) einen zentralen Bereich (19) mit einer erhöhten Konzentration von ferromagnetischen Partikeln (10) und einen Randbereich (20) vorzugsweise ohne ferromagnetische Partikel (10) aufweist.

5. Greifvorrichtung nach einem der Ansprüche 1 bis 4,
**dadurch gekennzeichnet,**
**dass** das Elastomermaterial (9) auf der dem wenigstens einen Bauteil (8) abgewandten Stirnseite (12) eine vorzugsweise kuhlenartige Vertiefung (24) aufweist, wobei die Vertiefung (24) vorzugsweise in einem zentralen Bereich (19) des Kontaktelements (3) angeordnet ist.

6. Greifvorrichtung nach einem der Ansprüche 1 bis 5,
**dadurch gekennzeichnet,**
**dass** das Elastomermaterial (9) an einer senkrecht zur Kontaktfläche (4) verlaufenden Umfangsfläche (21) zumindest bereichsweise von einem starren Element (22) umfasst ist, wobei das starre Element (22) eine Anlagefläche (23) für das wenigstens eine Bauteil (8) ausbildet, die vorzugsweise Bestandteil der Kontaktfläche (4) ist.

7. Greifvorrichtung nach einem der Ansprüche 1 bis 6,
**dadurch gekennzeichnet,**
**dass** die Greifvorrichtung (1) eine Vielzahl von in einer Ebene matrixartig angeordneten Kontaktelementen (3) aufweist.

8. Greifvorrichtung nach einem der Ansprüche 1 bis 7,
**dadurch gekennzeichnet,**
**dass** die Dimensionierung des Kontaktelements (3) in einer in der Ebene der Kontaktfläche (4) liegenden Achse eine Erstreckung von 1cm bis 5cm, insbesondere von 1cm bis 3cm aufweist.

9. Greifvorrichtung nach Anspruch 7 oder Anspruch 8,
**dadurch gekennzeichnet,**
**dass** die elektrischen oder die magnetischen Felder der Kontaktelemente (3) einzeln oder in Gruppen ansteuerbar sind.

10. Greifvorrichtung nach einem der Ansprüche 1 bis 9,
**dadurch gekennzeichnet,**
**dass** das elektrische oder das magnetische Feld anhand einer Sollwertvorgabe einstellbar ist.

11. Greifvorrichtung nach einem der Ansprüche 1 bis 10,
**dadurch gekennzeichnet,**
**dass** die Haltemittel (2) wenigstens zwei, jeweils wenigstens ein Kontaktelement (3) aufweisende Greiffinger (16) aufweisen, wobei die wenigstens zwei Greiffinger (16) zu dem wenigstens einen Bauteil (8) realtivbewegbar sind und wobei die wenigstens zwei Greiffinger (16) vorzugsweise Bestandteile eines Handhabungsroboters (18) sind.

12. Greifvorrichtung nach Anspruch 1 bis 11,
**dadurch gekennzeichnet,**
**dass** wenigstens einem Kontaktelement (3) Sensormittel (25) zum Erfassen der Relativposition des wenigstens einen Bauteils (8) zu dem Kontaktelement (3) zugeordnet sind.

13. Verfahren zum Halten wenigstens eines Bauteils (8) mittels einer Greifvorrichtung (1), die nach einem der Ansprüche 1 bis 12 ausgebildet ist,
umfassend die folgenden Schritte:
- Relativpositionieren des wenigstens einen eine Kontaktfläche (4) aufweisenden Kontaktelements (3) der Haltemittel (2) zu dem wenigstens einen Bauteil (8) zum in Wirkverbindung bringen des wenigstens einen Bauteils (8) mit der Kontaktfläche (4);
- Erzeugen eines elektrischen oder magnetischen Feldes zum Ausbilden eines mittels der pneumatisch wirkenden Mittel (5) des Kontaktelements (3) erzeugbaren Unterdrucks zwischen dem wenigstens einen Bauteil (8) und der Kontaktfläche (4) durch eine elastische Deformation des Kontaktelements (3).

14. Verfahren nach Anspruch 13,
**dadurch gekennzeichnet,**
**dass** durch Sensormittel (25) die Relativposition des wenigstens einen Bauteils (8) zu dem Kontaktelement (3) erfasst wird, wobei das elektrische oder magnetische Feld in Abhängigkeit einer Sensorausgangsgröße beeinflusst wird, um die auf das wenigstens eine Bauteil (8) wirkende Haltekraft (F) einzustellen.

## Claims

1. Gripping device (1) for holding at least one component (8), comprising holding means (2) with at least one contact element (3) having a contact surface (4) for holding the at least one component (8), wherein the contact element (3) has pneumatically acting means (5) for producing a negative pressure between the at least one component (8) and the contact surface (4), wherein the negative pressure can be produced by an elastic deformation of the contact element (3) that can be induced by an electrical or magnetic field,
**characterized**
**in that** the pneumatically acting means (5) comprise an elastomer material (9) in which ferromagnetic particles (10) are arranged.

2. Gripping device according to Claim 1,
**characterized**
**in that** the ferromagnetic particles (10) consist of iron and/or nickel and/or cobalt.

3. Gripping device according to either of Claims 1 and 2,
**characterized**
**in that** the pneumatically acting means (5) are provided with an electrically conducting layer (13) on an end face (11) facing towards the at least one component (8) and an end face (12) facing away from the at least one component (8), wherein, to form the electrical field, the two electrically conducting layers (13) can be connected via a voltage source (14) or, on the end face (12) facing away from the at least one component (8), the pneumatically acting means (5) are assigned magnetic-field generating means, in particular coil means (7) having at least one winding, for generating a magnetic field.

4. Gripping device according to one of Claims 1 to 3,
**characterized**
**in that** the elastomer material (9) has a central region (19) with an increased concentration of ferromagnetic particles (10) and a peripheral region (20) preferably without ferromagnetic particles (10).

5. Gripping device according to one of Claims 1 to 4,
**characterized**
**in that** the elastomer material (9) has on the end face (12) facing away from the at least one component (8) a preferably well-like depression (24), wherein the depression (24) is preferably arranged in a central region (19) of the contact element (3).

6. Gripping device according to one of Claims 1 to 5,
**characterized**
**in that** the elastomer material (9) is enclosed at least in some regions on a circumferential surface (21) running perpendicularly to the contact surface (4) by a rigid element (22), wherein the rigid element (22) forms an abutting surface (23) for the at least one component (8) that is preferably a component part of the contact surface (4).

7. Gripping device according to one of Claims 1 to 6,
**characterized**
**in that** the gripping device (1) has a plurality of contact elements (3) arranged in one plane in the manner of a matrix.

8. Gripping device according to one of Claims 1 to 7,
**characterized**
**in that** the dimensioning of the contact element (3) in an axis lying in the plane of the contact surface (4) has an extent of 1 cm to 5 cm, in particular of 1 cm to 3 cm.

9. Gripping device according to Claim 7 or Claim 8,
**characterized**
**in that** the electrical or magnetic fields of the contact elements (3) can be activated individually or in groups.

10. Gripping device according to one of Claims 1 to 9,
**characterized**
**in that** the electrical or magnetic field can be set on the basis of a setpoint specification.

11. Gripping device according to one of Claims 1 to 10,
**characterized**
**in that** the holding means (2) have at least two gripping fingers (16), each having at least one contact element (3), wherein the at least two gripping fingers (16) are relatively movable in relation to the at least one component (8) and wherein the at least two gripping fingers (16) are preferably component parts of a handling robot (18).

12. Gripping device according to Claims 1 to 11,
**characterized**
**in that** at least one contact element (3) is assigned sensor means (25) for sensing the relative position of the at least one component (8) in relation to the contact element (3).

13. Method for holding at least one component (8) by means of a gripping device (1) which is formed according to one of Claims 1 to 12,
comprising the following steps:
- positioning the at least one contact element (3), having a contact surface (4), of the holding means (2) relatively in relation to the at least one component (8) to bring the at least one component (8) into operative connection with the contact surface (4);
- generating an electrical or magnetic field to form a negative pressure that can be produced by means of the pneumatically acting means (5) of the contact element (3) between the at least one component (8) and the contact surface (4) by an elastic deformation of the contact element (3).

14. Method according to Claim 13,
**characterized**
**in that** the relative position of the at least one component (8) in relation to the contact element (3) is sensed by sensor means (25), wherein the electrical or magnetic field is influenced in dependence on a sensor output variable in order to set the holding force (F) acting on the at least one component (8).

## Revendications

1. Dispositif de préhension (1) pour maintenir au moins un composant (8), avec des moyens de maintien (2) avec au moins un élément de contact (3) présentant une surface de contact (4) pour maintenir l'au moins un composant (8), l'élément de contact (3) présentant des moyens (5) à action pneumatique pour produire une dépression entre l'au moins un composant (8) et la surface de contact (4), la dépression pouvant être produite par une déformation élastique de l'élément de contact (3) pouvant être provoquée par un champ électrique ou magnétique,
**caractérisé**
**en ce que** les moyens à action pneumatique (5) présentent un matériau élastomère (9) dans lequel sont agencées des particules ferromagnétiques (10).

2. Dispositif de préhension selon la revendication 1,
**caractérisé**
**en ce que** les particules ferromagnétiques (10) sont constituées de fer et/ou de nickel et/ou de cobalt.

3. Dispositif de préhension selon l'une quelconque des revendications 1 à 2,
**caractérisé**
**en ce que** les moyens à action pneumatique (5) sont pourvus d'une couche électriquement conductrice (13) sur un côté frontal (11) tourné vers l'au moins un composant (8) et sur un côté frontal (12) détourné de l'au moins un composant (8), les deux couches électriquement conductrices (13) pouvant être reliées par l'intermédiaire d'une source de tension (14) pour former le champ électrique ou des moyens de production de champ magnétique, notamment des moyens de bobine (7) présentant au moins un enroulement pour produire un champ magnétique, étant associés aux moyens à action pneumatique (5) sur le côté frontal (12) détourné de l'au moins un composant (8).

4. Dispositif de préhension selon l'une quelconque des revendications 1 à 3,
**caractérisé**
**en ce que** le matériau élastomère (9) présente une zone centrale (19) avec une concentration accrue de particules ferromagnétiques (10) et une zone de bordure (20) de préférence sans particules ferromagnétiques (10).

5. Dispositif de préhension selon l'une quelconque des revendications 1 à 4,
**caractérisé**
**en ce que** le matériau élastomère (9) présente, sur le côté frontal (12) détourné de l'au moins un composant (8), un creux (24) de préférence en forme de cuvette, le creux (24) étant agencé de préférence dans une zone centrale (19) de l'élément de contact (3).

6. Dispositif de préhension selon l'une quelconque des revendications 1 à 5,
**caractérisé**
**en ce que** le matériau élastomère (9) est entouré au moins par zones par un élément rigide (22) sur une surface périphérique (21) s'étendant perpendiculairement à la surface de contact (4), l'élément rigide (22) formant une surface d'appui (23) pour l'au moins un composant (8), qui fait de préférence partie de la surface de contact (4) .

7. Dispositif de préhension selon l'une quelconque des revendications 1 à 6,
**caractérisé**
**en ce que** le dispositif de préhension (1) présente une pluralité d'éléments de contact (3) agencés de manière matricielle dans un plan.

8. Dispositif de préhension selon l'une quelconque des revendications 1 à 7,
**caractérisé**
**en ce que** le dimensionnement de l'élément de contact (3) dans un axe situé dans le plan de la surface de contact (4) présente une extension de 1 cm à 5 cm, notamment de 1 cm à 3 cm.

9. Dispositif de préhension selon la revendication 7 ou la revendication 8,
**caractérisé**
**en ce que** les champs électriques ou magnétiques des éléments de contact (3) peuvent être commandés individuellement ou en groupes.

10. Dispositif de préhension selon l'une quelconque des revendications 1 à 9,
**caractérisé**
**en ce que** le champ électrique ou le champ magnétique peut être réglé à l'aide d'une valeur de consigne.

11. Dispositif de préhension selon l'une quelconque des revendications 1 à 10,
**caractérisé**
**en ce que** les moyens de maintien (2) présentent au moins deux doigts de préhension (16) présentant chacun au moins un élément de contact (3), les au moins deux doigts de préhension (16) pouvant être déplacés de manière relative vers l'au moins un composant (8) et les au moins deux doigts de préhension (16) faisant de préférence partie d'un robot de manipulation (18).

12. Dispositif de préhension selon les revendications 1 à 11,
**caractérisé**
**en ce qu'**à au moins un élément de contact (3) sont associés des moyens de capteur (25) pour détecter la position relative de l'au moins un composant (8) par rapport à l'élément de contact (3).

13. Procédé de maintien d'au moins un composant (8) au moyen d'un dispositif de préhension (1) réalisé selon l'une quelconque des revendications 1 à 12,
comprenant les étapes suivantes :
- le positionnement relatif de l'au moins un élément de contact (3), présentant une surface de contact (4), des moyens de maintien (2) par rapport à l'au moins un composant (8) pour amener l'au moins un composant (8) en liaison active avec la surface de contact (4) ;
- la production d'un champ électrique ou magnétique pour former une dépression pouvant être produite à l'aide des moyens à action pneumatique (5) de l'élément de contact (3) entre l'au moins un composant (8) et la surface de contact (4) par une déformation élastique de l'élément de contact (3).

14. Procédé selon la revendication 13,
**caractérisé**
**en ce que** la position relative de l'au moins un composant (8) par rapport à l'élément de contact (3) est détectée par des moyens de capteur (25), le champ électrique ou magnétique étant influencé en fonction d'une grandeur de sortie du capteur, afin de régler la force de maintien (F) agissant sur l'au moins un composant (8).
